# EUROPEAN PATENT APPLICATION

(11) **EP 1 988 728 A1**
(43) Date of publication of application: **05.11.2008**
(21) Application number: 07714746.0
(22) Date of filing: 22.02.2007
(51) Int. Cl.: H04Q 7/36, H04J 11/00

(54) **COMMUNICATION DEVICE**

(30) Priority: 24.02.2006 JP 2006049043
(71) Applicant: MITSUBISHI ELECTRIC CORPORATION, Chiyoda-ku Tokyo 100-8310 (JP)
(72) Inventor: KUZE, Toshiyuki, Tokyo 100-8310 (JP); UCHIDA, Shigeru, Tokyo 100-8310 (JP)
(74) Representative: Pfenning, Meinig & Partner GbR
(86) International application number: PCT/JP2007/053248
(87) International publication number: WO 2007/099839

(57) **Abstract**

A communication apparatus according to the present invention works as a base station applicable to a wireless access system in which the same frequency is used among adjacent cells, and works so that a frame timing of each of frames having the same adaptability is synchronized with one another among adjacent cells. The communication apparatus includes a grouping unit 22 that determines an adaptability based on a reception quality notified by a mobile station located in a cell, and groups mobile stations or connections by each of adaptabilities; an adaptability-based frame-occupancy-rate determining unit 23 that determines a data-mapping amount (an available capacity) by each of the adaptabilities depending on an amount of interference; and a frame mapping unit 24 that controls the mobile stations or the connections grouped by each of the adaptabilities to be mapped to a wireless frame by each frame based on the determined data-mapping amount.

## Description

### TECHNICAL FIELD

The present invention relates to a communication apparatus in a wireless access system in which the same frequency (radio band) is used among adjacent cells, and more particularly, to a communication apparatus using a plurality of radio bands more than one.

### BACKGROUND ART

To achieve a high-speed and high-capacity communication, standardization of a MAN (Metropolitan Area Network) and a WAN (Wide Area Network) with an OFDM (Orthogonal Frequency Division Multiplexing) and an OFDMA (Orthogonal Frequency Division Multiplexing Access) has been promoted in the IEEE (Institute of Electrical and Electronics Engineers). For example, there are the IEEE 802.16 for a fixed wireless communication and the IEEE 802.16e for a mobile wireless communication (see Non-patent document 1).

The IEEE 802.16 and the IEEE 802.16e support a variety of QoS, such as a connectionless "Best Effort" service and a VoIP fixed-rate service. In such a wireless communication system, scheduling for maximizing a cell communication capacity is typically performed with a scheduler.

In general, in the wireless communication system using such a scheduler, a cell communication capacity is improved by concentrating a schedule on a connection having a high transmission quality while considering fairness depending on a quality of a transmission channel connecting between a base station and a mobile station. As representative methods that employ this process, there are a "MAX CIR" method and a PF (Proportional Fairness) method.

In the "MAX CIR" method, a traffic of a connection having a higher CINR (Carrier to Interference and Noise Ratio) is sequentially transmitted preferentially. On the other hand, in the PF method, current qualities of CINRs are compared with an average CINR, and traffic of a connection having a higher current quality of CINR than the average CINR is transmitted sequentially. Therefore, scheduling by the PF method is fairer as compared with that by the "MAX CIR" method. Incidentally, these existing scheduling algorithms is based on a result of measurement of a CINR, and they do not control interference aggressively to avoid the interference.

As a method for avoiding the interference, a hybrid method as employed in a technology disclosed in patent document 1 can be cited. In the hybrid method, an MC-CDMA, which is very tolerant of interference, is applied to a cell edge and an OFDM is applied to a cell center in which interference is less.

Non-patent document 1: IEEE 802.16 (Part 16: Air Interface for Fixed Broadband Wireless Access Systems)
Patent document 1: Japanese Patent Application Laid-open No. 2004-200856

### DISCLOSURE OF INVENTION

### PROBLEM TO BE SOLVED BY THE INVENTION

In an OFDM or OFDMA wireless communication system with the same frequency, when the same subcarrier is used between an adjacent cell and an in-zone cell, a cell communication capacity is greatly affected by interference occurring at a cell edge. Therefore, a subchannelization technique called permutation is employed in the IEEE 802.16 and the IEEE 802.16e. In the permutation technique, a mapping relation between a logical subcarrier and an actual physical subcarrier is different by each identifier assigned to each of cells, called "CELL_ID". Therefore, even when a logical subcarrier is used as before, a physical subcarrier that is actually mapped is different, so that the probability of collision of subcarriers can be reduced by the application of the permutation technique unless all subcarriers are used.

However, the IEEE 802.16 and the IEEE 802.16e have not defined how to avoid interference occurring between adjacent cells by the application of the permutation. Furthermore, the conventional scheduling algorithm does not include an algorithm for avoiding inter-cell interference, and employs a method of performing scheduling depending on an amount of interference between cells.

The present invention is made in view of the above discussion, and an object of the present invention is to achieve a communication apparatus capable of maximizing a cell communication capacity while avoiding interference.

### MEANS FOR SOLVING PROBLEM

To solve the above problems and to achieve the object, a communication apparatus according to the present invention works as a base station applicable to a wireless access system in which the same frequency is used among adjacent cells, and works in such a manner that a frame timing of each of frames having the same adaptability or a slot timing of each of slots having the same adaptability is synchronized with one another among adjacent cells. The communication apparatus includes a grouping unit that determines an adaptability (a pair of a modulation rate and a coding rate) based on a reception quality notified by a mobile station located in a cell, and groups mobile stations or connections by each of adaptabilities; a mapping-amount determining unit that determines a data-mapping amount (an available capacity) by each of the adaptabilities depending on an amount of interference; and a mapping unit that performs a control so as to map the mobile stations or the connections grouped by each of the adaptabilities to a wireless frame by each frame or each slot based on the data-mapping amount.

### EFFECT OF THE INVENTION

According to the invention, it is possible to achieve maximization of a cell communication capacity while avoiding interference.

### BRIEF DESCRIPTION OF DRAWINGS

[Fig. 1] Fig. 1 is a diagram illustrating a DL wireless frame of each of base stations and a data-mapping rate of each of the wireless frames.
[Fig. 2] Fig. 2 is a diagram that an adaptability of data by each of connections, which is mapped to each of the wireless frames, is added to that is shown in Fig. 1.
[Fig. 3] Fig. 3 is a diagram illustrating a configuration example of a base station according to the present invention.
[Fig. 4] Fig. 4 is a diagram illustrating a configuration example of a scheduling unit.
[Fig. 5] Fig. 5 is a diagram illustrating an example of grouping in a wireless communication system employing an omnidirectional antenna.
[Fig. 6] Fig. 6 is a diagram illustrating an example in which a frame timing of each of frames having the same adaptability is synchronized with each other between adjacent cells.
[Fig. 7] Fig. 7 is a diagram for explaining an amount of interference occurring between the adjacent cells.
[Fig. 8] Fig. 8 is a diagram illustrating an example in which one wireless frame is divided into a SLOT #1 and a SLOT #2.
[Fig. 9] Fig. 9 is a diagram illustrating an example in which another "DL, QPSK, Rate=1/2" wireless frame is added due to an increase of the number of users in a "QPSK, Rate=1/2" zone.
[Fig. 10] Fig. 10 is a diagram illustrating an example in which a communication capacity by each modulation pattern is changed by changing an allocation per slot.
[Fig. 11] Fig. 11 is a diagram illustrating one example of a cell configuration and a frequency allocation in an OFDMA system.
[Fig. 12] Fig. 12 is a diagram illustrating one example of a division into three subcarrier groups based on an FFR for a WiMAX.
[Fig. 13] Fig. 13 is a diagram illustrating one example of a frequency allocation in a communication between a mobile station located at a cell periphery and a base station of the cell.
[Fig. 14] Fig. 14 is a diagram illustrating one example of a frequency allocation in a communication between a mobile station located at a cell center and a base station of the same cell.
[Fig. 15] Fig. 15 is a diagram illustrating one example in which a use subcarrier group is switched in the middle of a frame.
[Fig. 16] Fig. 16 is a diagram for explaining over-ridge interference occurring at a cell periphery.
[Fig. 17] Fig. 17 is a diagram for explaining adjacent-cell interference occurring at a cell center.
[Fig. 18] Fig. 18 is a diagram illustrating one example of mapping (a frame mapping synchronization method) according to a third embodiment when a frame timing is synchronized with one another among adjacent cells.
[Fig. 19] Fig. 19 is a diagram illustrating a condition of interference occurring when a mobile station located at a cell periphery communicates with a base station of the same cell.
[Fig. 20] Fig. 20 is a diagram illustrating a condition of interference occurring when a mobile station located at a cell center communicates with a base station of the same cell.

### EXPLANATIONS OF LETTERS OR NUMERALS

- 1: base station
- 11: QoS separating unit
- 12: retransmission/traffic control unit
- 13: scheduling unit
- 14: PDU establishing unit
- 15: baseband processing unit
- 16: level measuring unit
- 21: user-data storing unit
- 22: grouping unit
- 23: adaptability-based frame-occupancy-rate determining unit
- 24: frame mapping unit

### BEST MODE(S) FOR CARRYING OUT THE INVENTION

Exemplary embodiments of a communication apparatus according to the present invention are explained in detail below with reference to the accompanying drawings. Incidentally, the invention is not limited to the following embodiments. The present invention provides a scheduling algorithm capable of avoiding interference even when the same frequency (radio band) is used among adjacent cells in, for example, a single wireless access system.

### First embodiment.

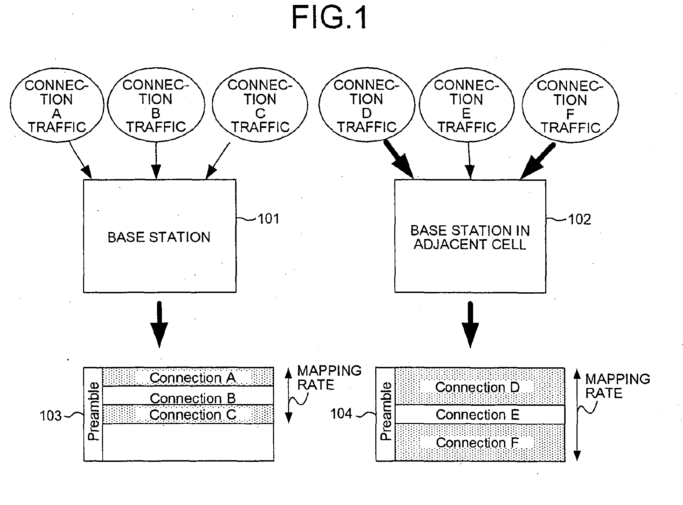

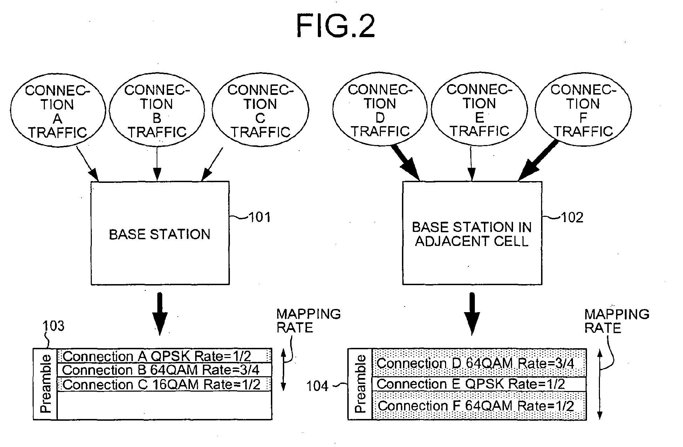

In a wireless communication system employing a conventional permutation technique (the IEEE 802.16, the IEEE 802.16e, and the like), each of the base stations arranged in each of the cells operates independently, and employ a method for mapping data packets from a plurality of connections depending on an amount of generated traffic on a frame-by-frame basis. Therefore, there is no method for grasping a data-mapping amount of a wireless frame in an adjacent cell (see Fig. 1). Moreover, such a data packet to which various types of adaptabilities (a modulation rate and a coding rate) are mapped is mixed (see Fig. 2), so that it is difficult to define a desired data-mapping amount.

Fig. 1 illustrates DL wireless frames 103 and 104 of a base station 101 and an adjacent base station 102 respectively, and each of data-mapping rates of the DL wireless frames 103 and 104 with respect to connection A traffic, connection B traffic, and connection C traffic on the base station 101, and connection D traffic, connection E traffic, and connection F traffic on the adjacent base station 102 respectively. Fig. 1 shows that an amount of a data packet mapped frame by frame (a mapping rate) differs depending on an amount of traffic generated in each of traffic sources on each of the base stations. Therefore, unless a frame-by-frame mapping capacity is exchanged between the base stations, it is difficult for each of the base stations to grasp a data-mapping rate in the adjacent base station. On the other hand, if a control message is exchanged frame by frame to notify an amount of traffic between the adjacent cells, it results in an increase of an amount of traffic on a backfall network connecting between the base stations.

Fig. 2 is a diagram that an adaptability (a modulation rate and a coding rate) of data by each of connections, which is mapped to each of the wireless frames, is added to that is shown in Fig. 1. In this manner, when a plurality of adaptabilities is mapped to one wireless frame, a desired CINR is different by each of the adaptabilities, so that it is difficult to calculate a data-mapping rate for avoiding the interference.

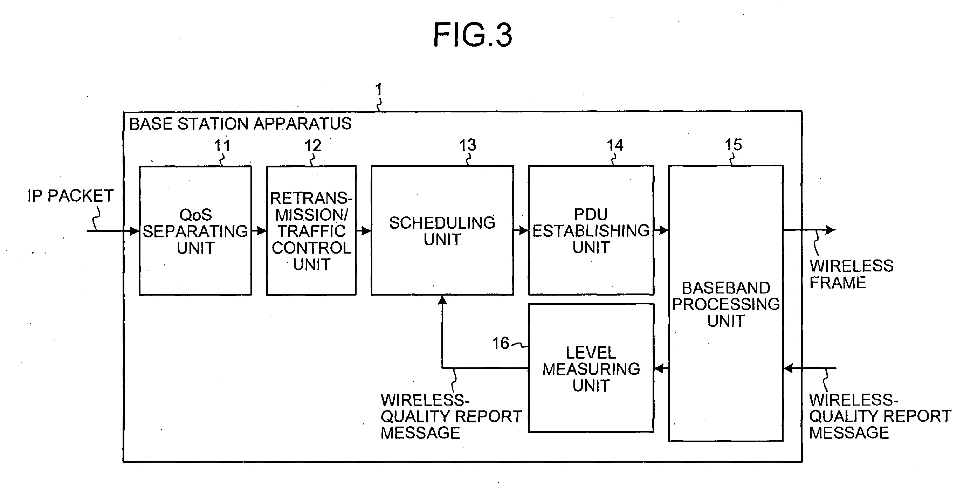

In the present embodiment, an interference avoidance algorithm that can solve the above problems is provided. Fig. 3 is a diagram illustrating a configuration example of a base station working as the communication apparatus according to the present invention, and specifically illustrates the base station including a scheduler according to the present embodiment.

As shown in Fig. 3, a base station 1 includes a QoS separating unit 11, a retransmission/traffic control unit 12, a scheduling unit 13, a PDU establishing unit 14, a baseband processing unit 15, and a level measuring unit 16. The QoS separating unit 11 separates an IP packet by each of QoS (Quality of Service) classes. The retransmission/traffic control unit 12 performs a retransmission control and a traffic control. The scheduling unit 13 allocates "MAC PDU" to a wireless frame. The PDU establishing unit 14 establishes the "MAC PDU" in accordance with an instruction from the scheduling unit 13. The baseband processing unit 15 performs wireless signal processing for the "MAC PDU" mapped by the scheduling unit 13. The level measuring unit 16 collects a wireless quality (such as a CINR) measured by each mobile station in accordance with an instruction from the scheduling unit 13.

The QoS separating unit 11 separates connections of each IP packet by each QoS. Then, the retransmission/traffic control unit 12 performs a retransmission/traffic control on each of the connections. After that, the scheduling unit 13 determines, by each frame, a connection and an amount of data to be mapped. At this time, the scheduling unit 13 implements a grouping of the mobile stations or the connections based on a result of level measurement (a wireless-quality report message shown in the drawing).

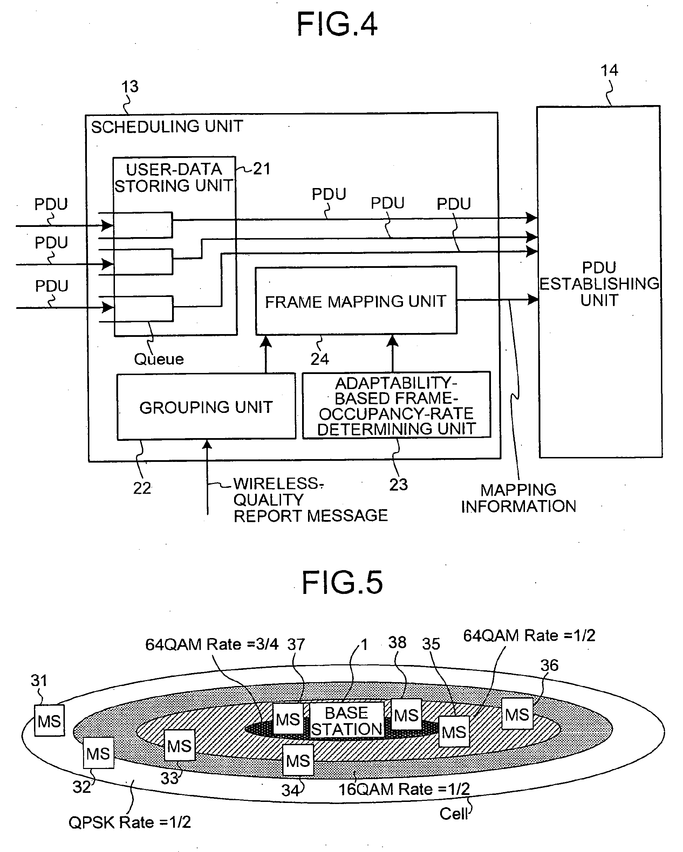

A configuration of the scheduling unit 13 is explained below. As shown in Fig. 4, the scheduling unit 13 includes a user-data storing unit 21, a grouping unit 22, an adaptability-based frame-occupancy-rate determining unit 23, and a frame mapping unit 24. The user-data storing unit 21 stores therein a PDU (Packet Data Unit) from the retransmission/traffic control unit 12 by each of the connections by using the Queue. The grouping unit 22 groups the mobile stations or the connections into zones of each of adaptabilities (a pair of a modulation rate and a coding rate) based on a wireless-quality report message from the level measuring unit 16. The adaptability-based frame-occupancy-rate determining unit 23 determines an occupancy rate (an unoccupied subcarrier rate) of a wireless frame available for data mapping by each of the adaptabilities. The frame mapping unit 24 maps "MAC PDU" to each frame (slot) in accordance with an instruction from the adaptability-based frame-occupancy-rate determining unit 23 based on the mobile stations or the connections that are grouped by each of the adaptabilities by the grouping unit 22. Mapping information of the "MAC PDU" mapped to each wireless frame is transmitted to the PDU establishing unit 14. The PDU establishing unit 14 establishes the "MAC PDU" in accordance with the received mapping information (in the IEEE 802.16, the minimum packet size by each ARQ connection is defined as ARQ_BLOCK_SIZE, and "MAC PDU" is established with this size as the minimum unit).

Subsequently, operations performed by the grouping unit 22 is explained below. The grouping unit 22 receives a CINR notified as a wireless-quality report message from a mobile station in a cell, and determines an adaptability (a modulation rate' and a coding rate) depending on the CINR. The grouping unit 22 determines the adaptability based on a CINR and a desired PER (Packet Error Rate) in the same manner as a commonly-used adaptive modulation system. Then, the grouping unit 22 groups connections (or mobile stations) by each of adaptabilities.

Fig. 5 is a diagram illustrating an example of grouping in a wireless communication system employing an omnidirectional antenna. Fig. 5 illustrates DL (Down Link) adaptability zones (zones determined based on a modulation rate and an FEC coding rate) when the base station 1 transmits signals toward within a cell via the omnidirectional antenna. Alternatively, adaptability zones can be similarly established based on a result of level measurement by using a sector antenna instead of the omnidirectional antenna.

In the example shown in Fig. 5, mobile stations (MS) 31 and 32 belong to a "QPSK, Rate=1/2" zone, MS 33 and MS 34 belong to a "16QAM, Rate=1/2" zone, MS 35 and MS 36 belong to a "64QAM, Rate=1/2" zone, and MS 37 and MS 38 belong to a "64QAM, Rate=3/4" zone.

Then, the frame mapping unit 24 selects a mobile station having the same adaptability (a modulation rate and a coding rate) by each of wireless frames, or data of a connection belonging to the mobile station, as a mapping candidate to a wireless frame.

The adaptability-based frame-occupancy-rate determining unit 23 calculates a data-mapping rate by each frame by the application of a method for frame mapping synchronization between adjacent base stations, which will be explained later.

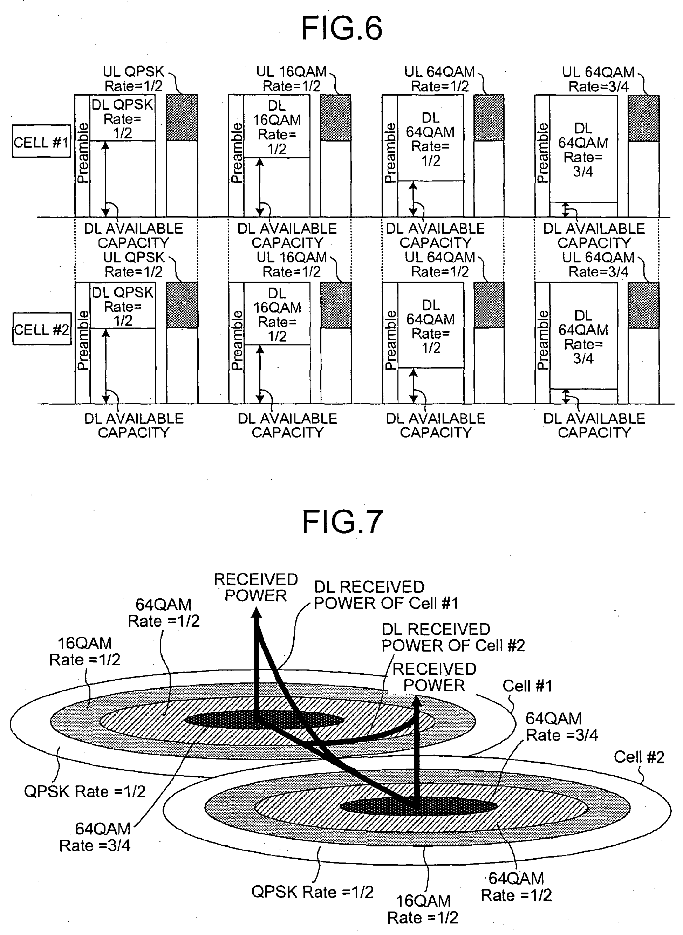

A basic pattern of frame mapping between adjacent base stations is explained below. Fig. 6 illustrates an example in which a frame timing of each of frames having the same adaptability is synchronized with each other between adjacent cells (the method for frame mapping synchronization). In this method, a transmission frame timing of "DL (Down Link), QPSK, Rate=1/2" in a CELL #1 and that of "DL, QPSK, Rate=1/2" in a CELL #2 are synchronized with each other. Moreover, a transmission frame timing of "DL, 16QAM, Rate=1/2" in the CELL #1 and that of "DL, 16QAM, Rate=1/2" in the CELL #2 are synchronized with each other. Moreover, a transmission frame timing of "DL, 64QAM, Rate=1/2" in the CELL #1 and that of "DL, 64QAM, Rate=1/2" in the CELL #2 are synchronized with each other. Finally, a transmission frame timing of "DL, 64QAM, Rate=3/4" in the CELL #1 and that of "DL, 64QAM, Rate=3/4" in the CELL #2 are synchronized with each other. The same applies to a case of UL.

When this method is used, as shown in Fig. 7, an amount of interference occurring between the adjacent cells depends on a distance between base stations of those cells. In the example shown in Fig. 7, a received power of the CELL #1 and a received power of the CELL #2 decrease depending on a distance between base stations of those cells (in general, decrease according to the third power law or the fourth power law). Therefore, in the example shown in Fig. 7, a "QPSK, Rate=1/2" zone has the highest interference power, and an amount of interference decreases in the order of a "16QAM, Rate=1/2" zone, a "64QAM, Rate=1/2" zone, and a "64QAM, Rate=3/4" zone.

The adaptability-based frame-occupancy-rate determining unit 23 calculates a data-mapping amount based on pre-calculated interference. As a result, the number of use subcarriers by each adaptability-based frame is limited, and also a probability of using the same physical subcarrier is suppressed due to an effect of the permutation. In the example shown in Fig. 6, the "DL, QPSK, Rate=1/2" zone in which the interference is maximum has the largest DL available capacity, and the "64QAM, Rate=3/4" zone in which the interference is minimum has the smallest DL available capacity. In other words, in the present embodiment, a data-mapping amount (an available capacity) for interference suppression is defined by each frame so as to obtain a desired PER. As a result, a cell communication capacity can be improved (by the application of a conventional method, it is not possible to grasp a data-mapping amount (an amount of interference) of other cell, so that it is not possible to define a data-mapping amount of a self cell).

In mobile stations (or connections) belonging to the same adaptability, when any of connections is to be selected, the conventional "MAX CIR" method and PF method are applied. Namely, the "MAX CIR" for maximization of a cell communication capacity and the PF method as a scheduling algorithm considered for fairness can be applied.

In this manner, in the present embodiment, an adaptability is defined in synchronization with an adjacent base station by each frame, so that it is possible to calculate a data-mapping amount for interference suppression so as to obtain a desired PER or to perform tuning on an actual system.

Furthermore, an adaptability is defined in synchronization with an adjacent base station, so that a data-mapping amount of a center cell in which interference is less can be increased. As a result, the cell communication capacity can be drastically improved.

Moreover, an adaptability (a modulation rate and a coding rate) is defined by each frame so as to avoid interference, i.e., a data-mapping amount available in each of adaptability-based zones is defined in frame, so that it is possible to avoid such a problem that most of a radio resource is occupied by a mobile station that is in a bad environment, and thereby degrading a cell communication capacity. For example, when there is no limitation of a unit such as a frame in the present invention, the "QPSK, Rate=1/2" zone having a poor CINR requires the larger number of OFDMA symbols than a zone having a high adaptability even in the same data packet due to a difference in a modulation rate. Therefore, a cell communication capacity degrades as the number of connections having a poor CINR increases.

Furthermore, similar effect as above can be achieved when an STC (Space Time Coding) is used.

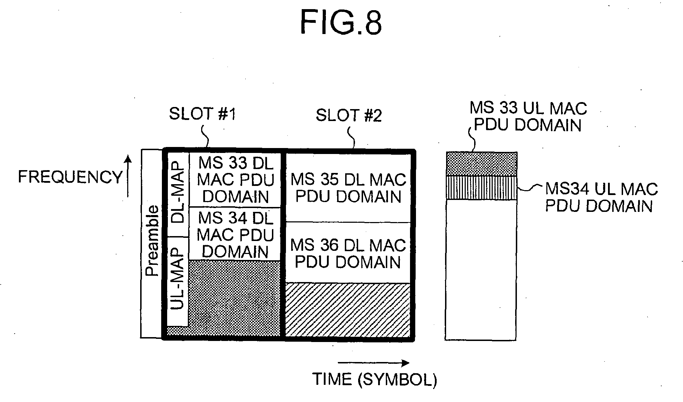

Incidentally, in the above embodiment, a frame is the minimum allocation unit. Alternatively, as shown in Fig. 8, one frame can be divided into a plurality of slots, and a slot timing of each of the slots can be synchronized with each other between adjacent cells. In the example shown in Fig. 8, one wireless frame is divided into a SLOT #1 (MS 33, MS 34) and a SLOT #2 (MS 35, MS 36) as an example. Moreover, Fig. 8 illustrates an example in which packet mapping with respect to two slots is specified by UL-MAP (MS 33, MS 34) when it is assumed that the wireless frame is divided by the time division system on DL and the IEEE 802.16 is applied on UL.

### Second embodiment.

Subsequently, a second embodiment is explained below. A configuration of a base station according to the second embodiment is identical to that of the first embodiment shown in Figs. 3 and 4. Only the process that is different from that in the first embodiment is explained below.

For example, the number of mobile stations or the number of connections existing in each of adaptability-based zones varies with time. Therefore, in the present embodiment, the number of frames or a size of a slot in each of the adaptability-based zones is changed depending on the number of mobile stations, the number of connections existing in each of the zones, or an amount of communication traffic.

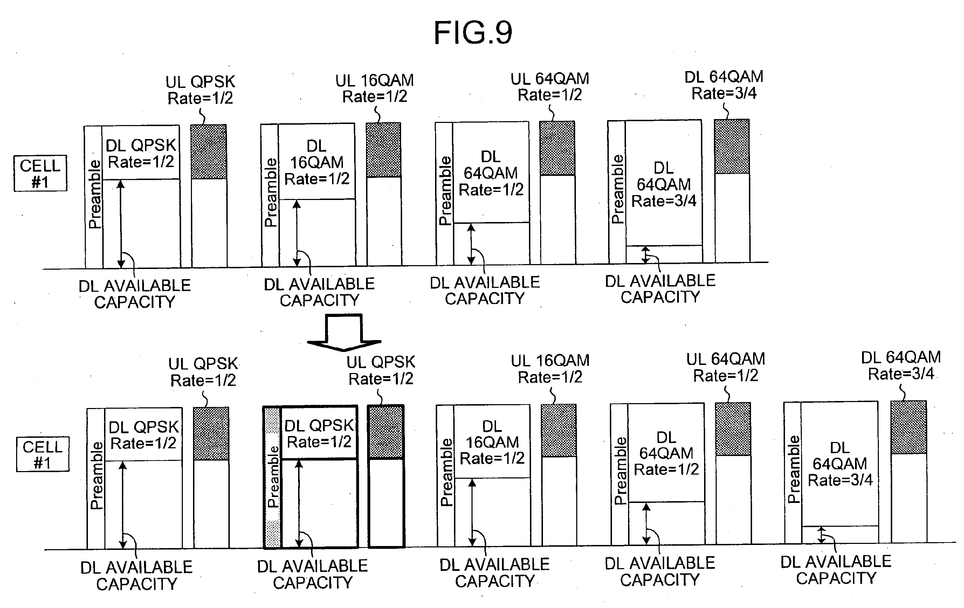

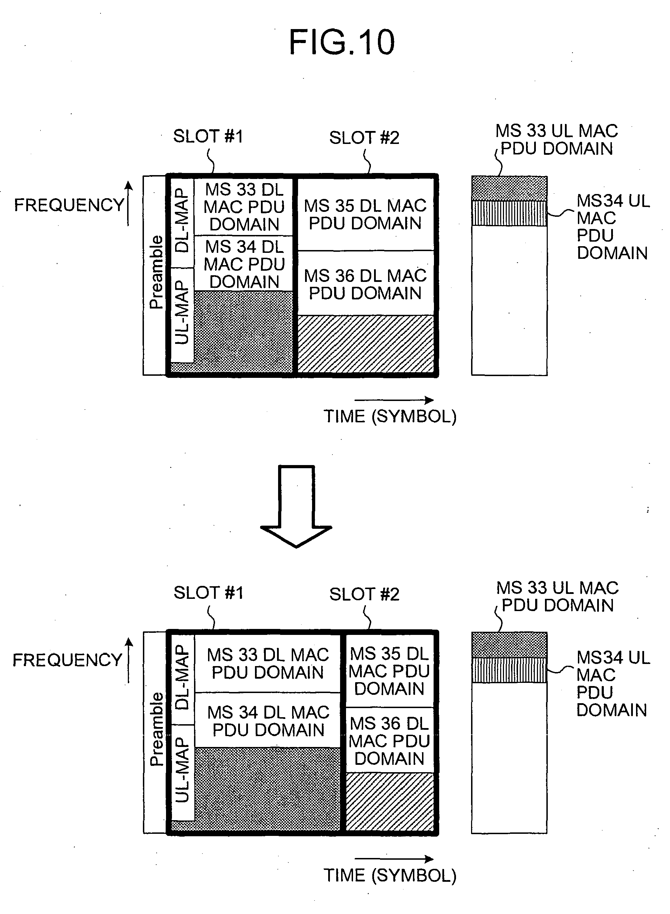

Fig. 9 illustrates an example in which another "DL, QPSK, Rate=1/2" wireless frame is added because of an increase in the number of users belonging to a "QPSK, Rate=1/2" zone. Fig. 10 illustrates an example in which a communication capacity by each modulation pattern is changed by a variation of an allocation per slot. In this example, a communication capacity of a SLOT #1 is increased, and a communication capacity of a SLOT #2 is decreased.

In this manner, in the present embodiment, a change of a frame volume or a slot volume by each modulation pattern and a slot size is performed to be synchronized between base stations depending on the number of mobile stations, the number of connections, or an amount of communication traffic that vary with time. As a result, it is possible to achieve a frame allocation or a slot allocation depending on a location of and a load on a mobile station, and thus it is possible to maximize a cell communication capacity.

### Third embodiment.

Subsequently, a third embodiment is explained below. A configuration of a base station according to the third embodiment is identical to that of the first embodiment shown in Figs. 3 and 4. Only the process that is different from that in the first and second embodiments is explained below.

In the present embodiment, there is explained a case in which interference is avoided depending on an amount of traffic in such an OFDMA system that all subcarriers are classified into any of subcarrier groups (3×N subcarrier groups: N is an integer), and all the subcarrier groups are used at a cell center, and one of the 3xN subcarrier groups to be used at a cell periphery is selected not to overlap with a subcarrier'group used by an adjacent cell.

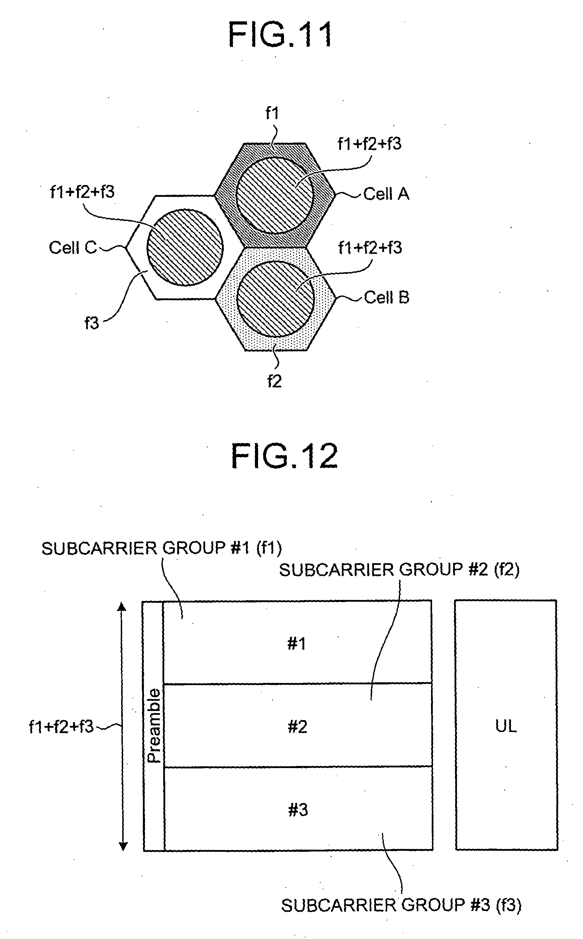

Fig. 11 is a diagram illustrating one example of cells in the OFDMA system when N=1. Fig. 11 illustrates one example of a cell configuration and a frequency allocation, for example, in such a case that in each of three cells A, B, and C adjacent to one another, all subcarrier groups #1, #2, and #3 are used at a cell center (corresponding to a portion inside a circle in the drawing) (all of f1, f2, and f3 are used), and any one of the subcarrier groups to be used at a cell periphery (corresponding to a portion outside the circle in the drawing) is selected not to overlap with the subcarrier group used by the other cells (any one of f1, f2, and f3 is selected). Such a system is explained in the WiMAX (World Interoperability for Microwave Access) Forum as an FFR (Fractional Frequency Reuse).

Based on the FFR for the WiMAX, as shown in Fig. 12, a frequency bandwidth of a wireless frame is divided into three frequency domains, specifically, into a subcarrier group #1 (f1), a subcarrier group #2 (f2), and a subcarrier group #3 (f3).

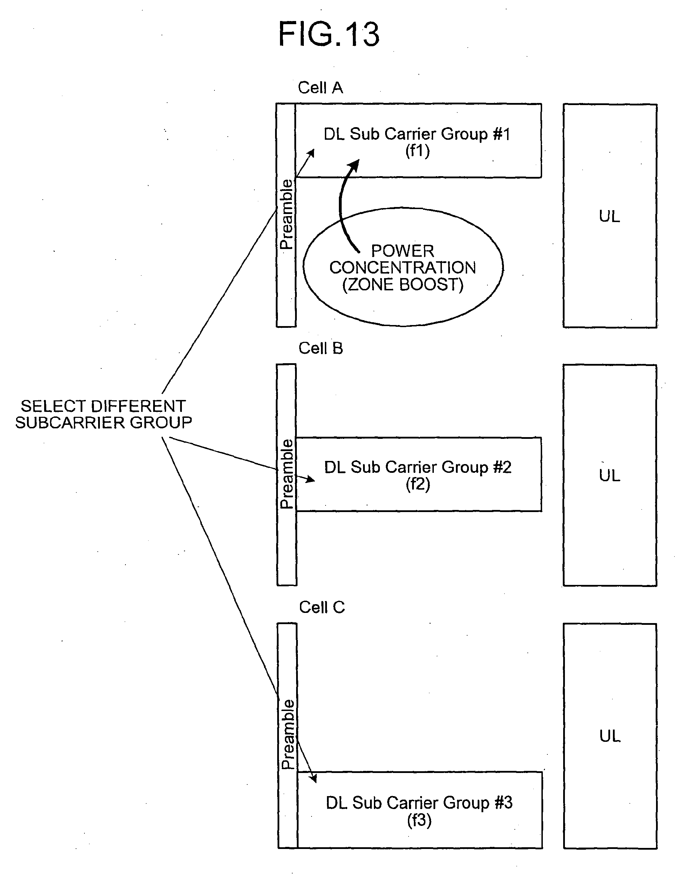

At a periphery of each of the three cells A, B, and C that are adjacent to one another (a cell periphery), as shown in Fig. 13, the scheduling unit 13 of each of the base stations allocates a different subcarrier group from one another thereby avoiding inter-cell interference among the adjacent cells. Furthermore, in the present embodiment, the baseband processing unit 15 of each of the base stations controls an in-band power in each of the wireless frames to be constant, and boosts a power of each of the allocated subcarrier groups threefold to transmit each of the wireless frames. Therefore, although the available bandwidth is reduced by one-third, the power can be boosted to three times higher. Thus, it is possible to achieve maximization of a cell communication capacity with avoiding interference simultaneously.

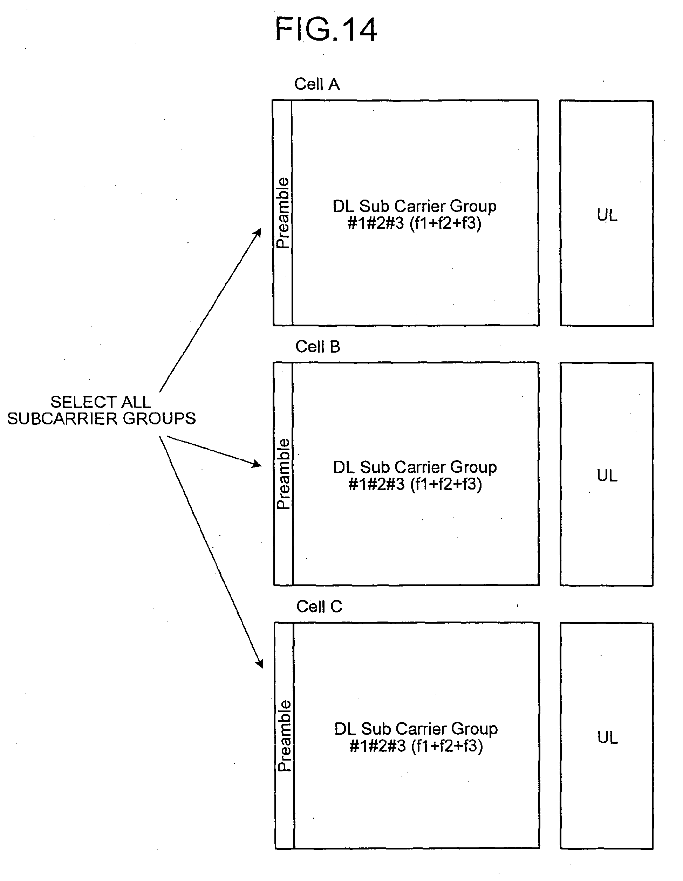

Furthermore, based on the FFR for the WiMAX, at a center of each of the three cells A, B, and C that are adjacent to one another (a cell center), as shown in Fig. 14, each of the base stations communicates with one another with all the subcarrier groups (f1+f2+f3) by mapping control by the scheduling unit 13.

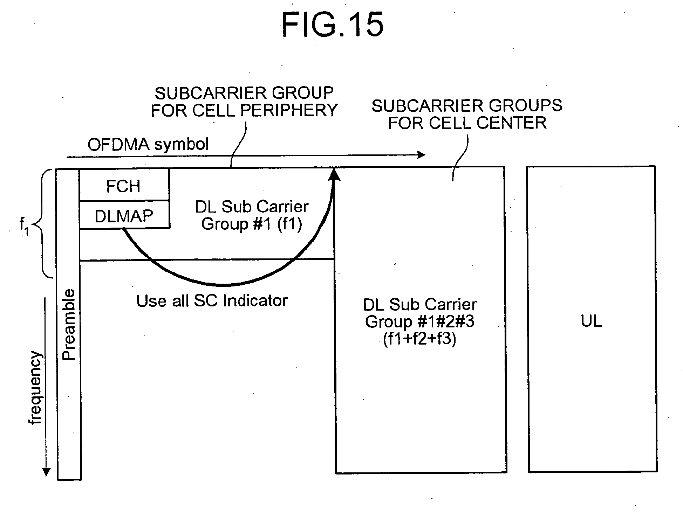

Moreover, as shown in Fig. 15, when a mobile station moves from a cell periphery to a cell center in the middle of transmitting a frame, by the application of "use all Subcarrier Indicator" of DL-MAP, a communication using the one-third frequency bandwidth is switched to a communication using the full frequency bandwidth by mapping control by the scheduling unit 13 based on the FFR for the WiMAX.

In the present embodiment, based on the premise of the above behaviors in conformity with the WiMAX, for example, a scheduling is performed in accordance with the processes described in the first and second embodiments above. Specifically, in a base station that works in such a manner that a frame timing (or a slot timing) of each of frames having the same adaptability is synchronized with one another among adjacent cells, first, the grouping unit 22 determines an adaptability based on a CINR notified as a wireless-quality report message from a mobile station in a self cell, and groups mobile stations or connections into a cell center or a cell periphery depending on each of the adaptabilities (there are a method of grouping based on a geographic location of a mobile station and a method of grouping based on a CINR). Then, the frame mapping unit 24 maps the mobile stations or the connections grouped depending on the adaptabilities to a wireless frame based on a predetermined data-mapping amount notified by the adaptability-based frame-occupancy-rate determining unit 23.

In other words, at a cell center, it can be expected that interference is reduced by a mutual distance decay, so that a high-speed and high-capacity communication with a multilevel modulation (such as a 64QAM) is performed between a base station and a mobile station (see Fig. 14). On the other hand, at a cell periphery, a mapping control is performed between the base station and the mobile station so as to eliminate inter-cell interference among adjacent cells (see Fig. 13), and also a power boost is performed while simultaneously avoiding interference. In this manner, a cell communication capacity is maximized.

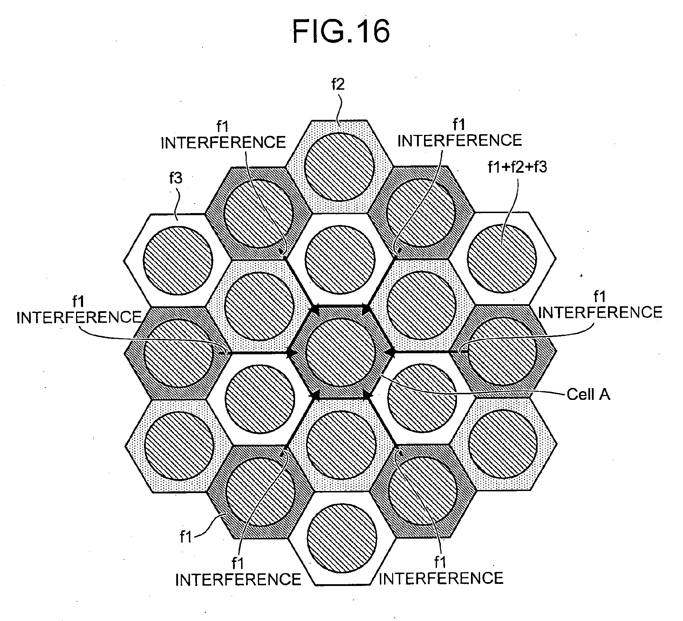

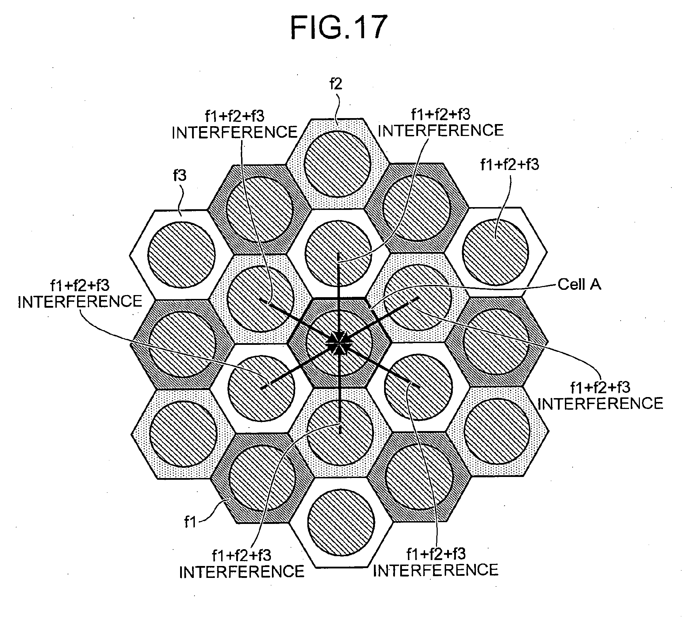

Fig. 16 is a diagram for explaining over-ridge interference occurring at a cell periphery. In the example shown in Fig. 16, a cell periphery (corresponding to a portion out of a circle) of a cell A, which is located in the center of cells other cells, receives f1 frequency interference corresponding to interference from over-ridge cells adjacent but one to the cell A (as indicated by arrows in the drawing), so that interference can be avoided due to a distance decay. Fig. 17 is a diagram for explaining adjacent-cell interference occurring at a cell center. In the example shown in Fig. 17, a cell center (corresponding to a portion inside the circle) of a cell, which is located in the center of other cells, receives f1+f2+f3 frequency interference corresponding to interference from adjacent cells. However, at the cell center, a transmission channel between a mobile station and a base station is in good condition, so that it is possible to establish a communication in a state where interference caused by other communication is reduced.

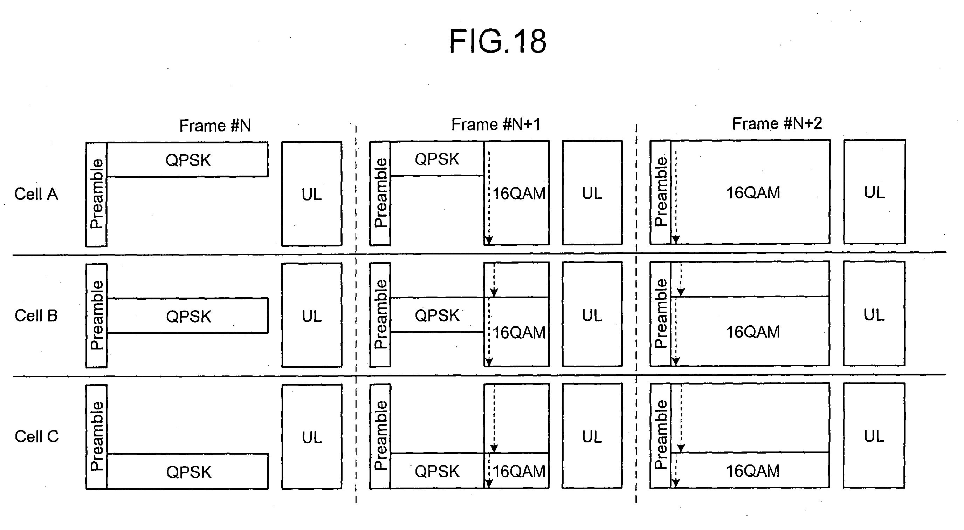

Fig. 18 is a diagram illustrating one example of mapping (a frame mapping synchronization method) according to the third embodiment when a frame timing of each of frames is synchronized with one another among adjacent cells. Specifically, Fig. 18 illustrates such a case that, in a state where a frame timing of each of a cell A, a cell B, and a cell C is synchronized with one another, an allocation (mapping) of subcarrier groups of a Frame #N, a Frame #N+1, a Frame #N+2, ... is performed. The Frame #N indicates an allocation of a subcarrier group when a mobile station located at a cell periphery communicates with the base station. The Frame #N+1 indicates an allocation of a subcarrier group when a mobile station located at a cell periphery communicates with the base station, and a mobile station located at a cell center communicates with the base station in midstream. The Frame #N+2 indicates an allocation of a subcarrier group when a mobile station located at a cell center communicates with the base station.

At this time, in a case of the WiMAX, based on the IEEE 802.16e-2005, data-mapping by the scheduling unit 13 is performed from a segment to which an FCH is allocated. Different "Cell ID" and "Perm_Base" are used in a case of different cells. Even when an amount of allocated data is identical to one another, a scheduling is performed so that mapping to a subcarrier preferably differs among the cells.

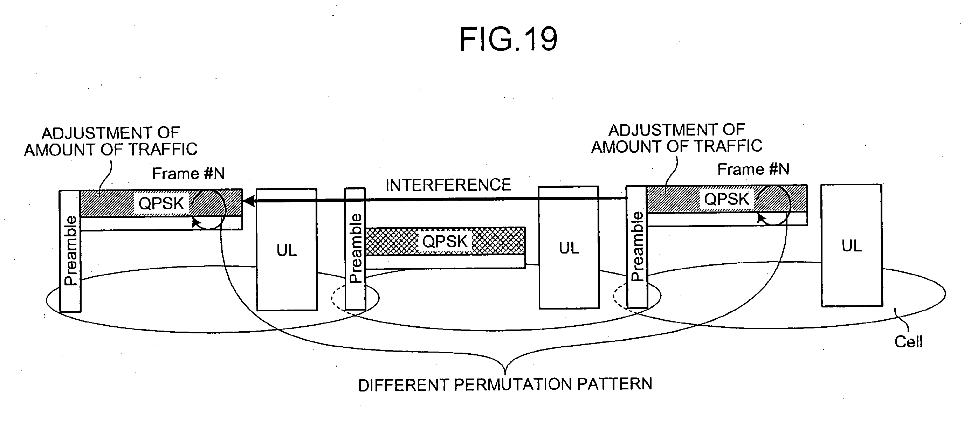

Fig. 19 is a diagram illustrating a condition of interference occurring when a mobile station located at a cell periphery communicates with a base station. For example, in the present embodiment, the scheduling unit 13 performs mapping of a subcarrier group #1 (f1) for cell peripheries with a different permutation pattern among cells, and adjusts an amount of traffic to reduce interference. At this time, a pilot subcarrier, which is not required for a process of equalizing data subcarriers, is not transmitted, so that it is possible to improve an effect of interference avoidance more.

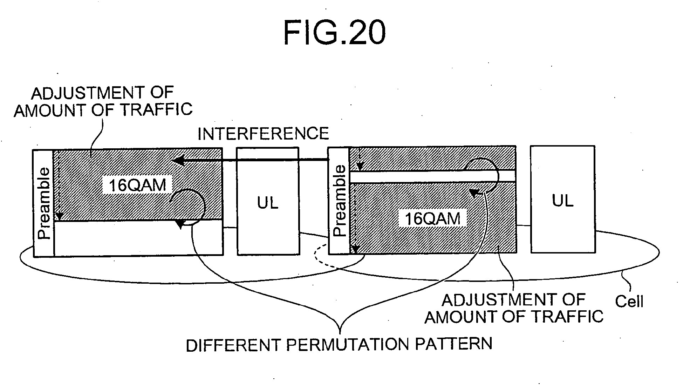

Furthermore, Fig. 20 is a diagram illustrating a condition of interference occurring when a mobile station located at a cell center communicates with a base station. For example, in the present embodiment, the scheduling unit 13 performs mapping with a different permutation pattern among cells adjacent to one another, and adjusts an amount of traffic to reduce interference. At this time, at the cell center, a pilot subcarrier, which is not required for a process of equalizing data subcarriers, is not transmitted in the same manner as that is at the cell periphery, so that it is possible to improve an effect of interference avoidance more.

### INDUSTRIAL APPLICABILITY

In this manner, a communication apparatus according to the present invention is useful for a wireless access system in which the same frequency is used among adjacent cells, and particularly, the communication apparatus is suitable for a base station using a plurality of radio bands more than one.

## Claims

1. A communication apparatus that works as a base station applicable to a wireless access system in which the same frequency is used among adjacent cells, and works in such a manner that a frame timing of each of frames having the same adaptability or a slot timing of each of slots having the same adaptability is synchronized with one another among adjacent cells, the communication apparatus comprising:
a grouping unit that determines an adaptability (a pair of a modulation rate and a coding rate) based on a reception quality notified by a mobile station located in a cell, and groups mobile stations or connections by each of adaptabilities;
a mapping-amount determining unit that determines a data-mapping amount (an available capacity) by each of the adaptabilities depending on an amount of interference; and
a mapping unit that performs a control so as to map the mobile stations or the connections grouped by each of the adaptabilities to a wireless frame by each frame or each slot based on the data-mapping amount.

2. The communication apparatus according to claim 1, wherein the grouping unit determines the adaptability based on a CINR (Carrier to Interference and Noise Ratio) and a desired PER (Packet Error Rate) that are notified as the reception quality.

3. The communication apparatus according to claim 1, wherein the mapping-amount determining unit determines the data-mapping amount that makes the available capacity larger with increase of the amount of interference.

4. The communication apparatus according to claim 2, wherein the mapping-amount determining unit determines the data-mapping amount that makes the available capacity larger with increase of the amount of interference.

5. The communication apparatus according to any of claims 1 to 4, wherein the number of frames or a size of slots by each of the adaptabilities is changed depending on the number of the mobile stations or the connections grouped by each of the adaptabilities or an amount of communication traffic.

6. The communication apparatus according to claim 1, wherein
the grouping unit determines an adaptability based on a reception quality notified by a mobile station located in a self cell, and groups mobile stations or connections into any of a cell center and a cell periphery depending on each of adaptabilities, and
the mapping unit allocates a different subcarrier group from one another to each of cells in communication with any of the mobile stations located at the cell periphery, and allocates all subcarrier groups to each of the cells in communication with any of the mobile stations located at the cell center.
